# EUROPEAN PATENT SPECIFICATION

(11) **EP 2 657 941 B1**
(45) Date of publication and mention of the grant of the patent: **01.11.2017**
(21) Application number: 13165220.8
(22) Date of filing: 24.04.2013
(51) Int. Cl.: G21C 9/012, G21C 15/18

(54) **HEAT REMOVAL SYSTEM AND METHOD FOR A NUCLEAR REACTOR**
WÄRMEABFUHRSYSTEM UND VERFAHREN FÜR EINEN KERNREAKTOR
SYSTÈME ET PROCÉDÉ D'ÉLIMINATION DE CHALEUR POUR RÉACTEUR NUCLÉAIRE

(30) Priority: 26.04.2012 US 201213456578
(43) Date of publication of application: 30.10.2013
(73) Proprietor: GE-Hitachi Nuclear Energy Americas LLC, Wilmington, NC 28401 (US)
(72) Inventor: Loewen, Eric P., Wilmington, NC 28401 (US); Heck, Charles L., Wilmington, NC 28401 (US)
(74) Representative: Cleary, Fidelma

(56) References cited:
- JP-A- S6 031 092
- US-A- 4 950 448

## Description

Example embodiments relate generally to nuclear reactors, and more particularly to a method and apparatus for an alternative cooling system for the suppression pool of a Boiling Water Reactor (BWR) nuclear reactor. The cooling system may be particularly beneficial in the event of a plant emergency that causes plant electrical power to be disrupted, or normal cooling of the suppression pool to otherwise become impaired. The cooling system may also be used to supplement a conventional residual heat removal system.

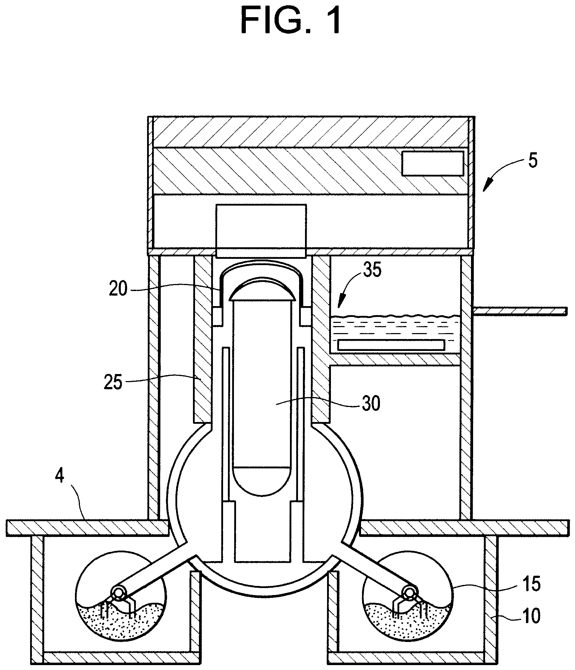

FIG. 1 is a cut-away view of a conventional boiling water nuclear reactor (BWR) reactor building. The reactor building 5 includes a suppression pool room 10 in which a suppression pool 15 is disposed. The suppression pool 15 is a torus shaped housing that forms part of the reactor building primary containment. Specifically, the suppression pool 15 is an extension of the steel primary containment vessel 20, which is located within the shell 25 of the reactor building 5. The suppression pool 15 is positioned below the reactor 30 and spent fuel pool 35, and is used to limit containment pressure increases during certain accidents. In particular, the suppression pool 15 is used to cool and condense steam released during plant accidents. For instance, the plant safety/relief valves are designed to discharge steam into the suppression pool 15, to condense the steam and mitigate undesired pressure increases. Conventionally, a BWR suppression pool 15 is approximately 42.7 metres (140 feet) in total diameter (i.e., plot plan diameter), with a 9.14 metres (30 foot) diameter torus shaped shell. During normal operation, the suppression pool 15 usually has water in the pool at a depth of about 4.57 metres (15 feet) (with approximately 1,000,000 gallons of suppression pool water in the suppression pool 15, during normal operation).

The pool 15 is conventionally cleaned and cooled by the residual heat removal (RHR) system of the BWR plant. During normal (non-accident) plant conditions, the RHR system can remove water from the suppression pool 15 (using conventional RHR pumps) and send the water through a demineralizer (not shown) to remove impurities and some radioactive isotopes that may be contained in the water. During a plant accident, the RHR system is also designed to remove some of the suppression pool water from the suppression pool 15 and send the water to a heat exchanger (within the RHR system) for cooling.

During a serious plant accident, normal plant electrical power may be disrupted. In particular, the plant may be without normal electrical power to run the conventional RHR system and pumps. If electrical power is disrupted for a lengthy period of time, water in the suppression pool 15 may eventually boil and impair the ability of the suppression pool 15 to condense plant steam and reduce containment pressure.

In a plant emergency, use of the RHR system may cause highly radioactive water (above acceptable design limits) to be transferred between the suppression pool 15 and RHR systems (located outside of primary containment). The transfer of the highly radioactive water between the suppression pool 15 and RHR system may, in and of itself, cause a potential escalation in leakage of harmful radioactive isotopes that may escape the suppression pool 15. Additionally, radiation dosage rates in areas of the RHR system could be excessively high during an accident, making it difficult for plant personnel to access and control the system.

At least one embodiment is directed to a heat removal system for a nuclear reactor.

In one embodiment in accordance with claim 1, the heat removal system includes a storage tank configured to store a heat transfer medium, a transfer system configured to selectively transfer the heat transfer medium from the storage tank to the nuclear reactor, and a delivery system operationally connected to the transfer system. The delivery system is configured to deliver the heat transfer medium to a suppression pool room of the nuclear reactor. The suppression pool room houses a suppression pool. The delivery system defines at least one opening into the suppression pool room. The opening is disposed above a mid-point of the suppression pool room.

In one embodiment, the transfer system includes at least one valve configured to control a flow of the heat transfer medium.

In one embodiment, the delivery system defines at least one opening into the suppression pool room. For example, the opening may be disposed above a mid-point of the suppression pool room.

In one embodiment, the delivery system is configured to deliver the heat transfer medium onto a housing of the suppression pool to remove heat.

In one embodiment, the heat removal system further includes a vent configured to vent gas from the suppression pool room.

At least one embodiment is directed to a method of removing heat from a nuclear reactor.

In one embodiment in accordance with claim 12, the method includes activating at least one flow control valve of a transfer system to permit flow of a heat transfer medium from a storage tank to a delivery system via the heat transfer system. The delivery system is configured to supply the heat transfer medium to a suppression pool room of the nuclear reactor, and the suppression pool room houses a suppression pool. The delivery system defines at least one opening into the suppression pool room. The opening is disposed above a mid-point of the suppression pool room.

At least one embodiment is directed to a method of providing a heat removal system for a nuclear reactor.

In one embodiment, the method includes installing a delivery system in the nuclear reactor. The delivery system is configured to deliver a heat transfer medium to a suppression pool room, and the suppression pool room includes a suppression pool. The method further includes installing at least one vent in the suppression pool room. The vent is configured to vent gas from the suppression pool room.

The method may further include connecting a transfer system between the delivery system and a storage tank. The storage tank stores the heat transfer medium, and the transfer system is configured to selectively transfer the heat transfer medium from the storage tank to the delivery system.

The above and other features and advantages of example embodiments will become more apparent by describing in detail, example embodiments with reference to the attached drawings. The accompanying drawings are intended to depict example embodiments and should not be interpreted to limit the intended scope of the claims. The accompanying drawings are not to be considered as drawn to scale unless explicitly noted.
FIG. 1 is a cut-away view of a conventional boiling water nuclear reactor (BWR) reactor building;
FIG. 2 is a cut-away view of a BWR building and heat removal system according to an embodiment;
FIG. 3A illustrates another example embodiment of a transfer system.
FIG. 3B illustrates a further example embodiment of a transfer system.
FIG. 4 illustrates yet another embodiment of a delivery system 120.
FIG. 5 illustrates a method a method of installing the heat removal system.
FIG. 6 illustrates a method of heat removal according to an example embodiment.

Detailed example embodiments are disclosed herein. However, specific structural and functional details disclosed herein are merely representative for purposes of describing example embodiments. Example embodiments may, however, be embodied in many alternate forms and should not be construed as limited to only the embodiments set forth herein.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but to the contrary, example embodiments are to cover all modifications, equivalents, and alternatives falling within the scope of example embodiments. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it may be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between", "adjacent" versus "directly adjacent", etc.).

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

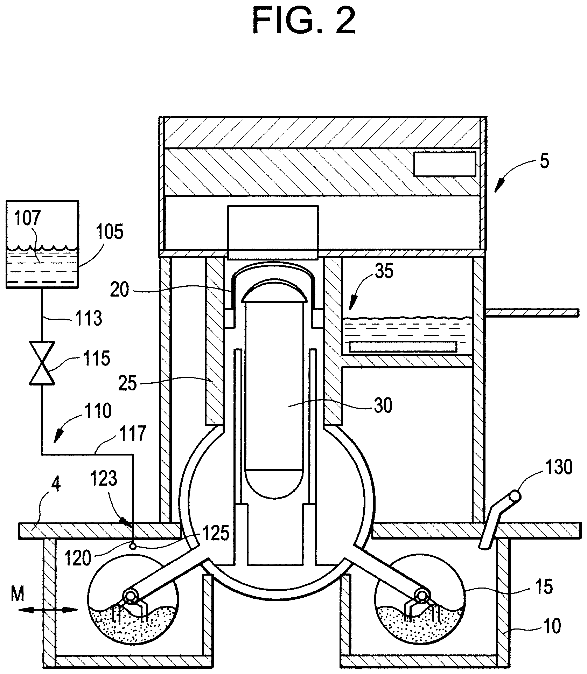

FIG. 2 is a cut-away view of a boiling water nuclear reactor (BWR) reactor building and heat removal system according to an example embodiment. The reactor building 5 includes a suppression pool room 10 in which a suppression pool 15 is disposed. The suppression pool 15 is a torus shaped housing, which forms part of the reactor building primary containment, and includes suppression pool water. Specifically, the suppression pool 15 is an extension of the steel primary containment vessel 20, which is located within the shell 25 of the reactor building 5. The suppression pool 15 is positioned below the reactor 30 and spent fuel pool 35, and is used to limit containment pressure increases during certain accidents. In particular, the suppression pool 15 is used to cool and condense steam released from the plant safety valves during normal and off normal conditions. For instance, many plant safety/relief valves are designed to discharge steam into the suppression pool 15, to condense the steam and mitigate undesired pressure increases inside the containment. In this example, the BWR suppression pool 15 may be approximately 140 feet in total diameter (i.e., plot plan diameter), with a 30 foot diameter torus shaped housing or shell. During normal operation, the suppression pool 15 may have suppression pool water in the pool at a depth of about 15 feet (with approximately 1,000,000 gallons of suppression pool water in the suppression pool 15, during normal operation).

The pool 15 may be cleaned and cooled by the residual heat removal (RHR) system of the BWR plant. During normal (non-accident) plant conditions, the RHR system can remove water from the suppression pool 15 (using conventional RHR pumps) and send the water through a demineralizer (not shown) to remove impurities and some radioactive isotopes that may be contained in the water. During a plant accident, the RHR system is also designed to remove heat from the suppression pool water with a heat exchanger (within the RHR system) for cooling.

According to an embodiment, a heat removal system is further provided. The heat removal system includes a storage tank 105, transfer system 110, and a delivery system 120. The storage tank 105 stores a heat transfer medium 107. The heat transfer medium 107 may be water, sea water, etc. In one embodiment, the storage tank 105 is disposed at a height greater than a mid-point M of the suppression pool 15.

The transfer system 110 is configured to provide one or more fluid communication paths from the storage tank 105 to the BWR building 5. For example, the transfer system 110 may include a first pipe 113, a flow control valve 115 and a second pipe 117. The first pipe 113 receives the heat transfer medium 107 from the storage tank 105. The flow control valve 115 controls the flow of the heat transfer medium 107 from the first pipe 113 to the second pipe 117. The second pipe 117 supplies the heat transfer medium 107 to a delivery system 120 at the BWR building 5. It will be appreciated that transfer system 110 may include one or more pipes receiving the heat transfer medium 107 from the storage tank 105. It will be further appreciated that the transfer system 110 may include one or more pipes supplying the heat transfer medium 107 to the delivery system 120. Still further, it will be appreciated that the transfer system 110 may include one or more flow control valves controlling the flow of the heat transfer medium 107 from the storage tank 105 to the delivery system 120.

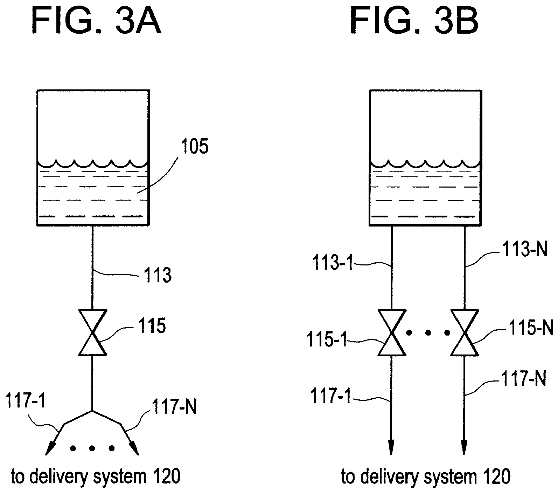

For example, FIG. 3A illustrates another example embodiment of a transfer system 110. In this embodiment, the transfer system 110 includes a plurality of second pipes 117-1 to 117-N, where N is an integer greater than 1. FIG. 3B illustrates a further example embodiment of a transfer system 110. In this embodiment, the transfer system 110 includes a plurality of first pipes 113-1 to 113-N, a one-to-one corresponding plurality of flow control valves 115-1 to 115-N, and a one-to-one corresponding plurality of second pipes 117-1 to 117-N, where N is an integer greater than 1.

Returning to FIG. 2, the delivery system 120 includes at least one pipe 123 connected to the transfer system 110 and penetrating into the suppression pool room 10. The pipe 123 defines at least one opening 125 into the suppression pool room 10 for delivery of the heat transfer medium 107 into the suppression pool room 10. In one embodiment, the opening 125 is at least above a mid-point M of the suppression pool 15. Furthermore, as shown in FIG. 2, the opening 125 may be disposed over the suppression pool 15 such that the heat transfer medium 107 flowing into the suppression pool room 10 flows over the housing of the suppression pool 15.

It will be appreciated that the delivery system 120 may include one or more pipes 123 connected to the transfer system 110 and defining one or more openings 125 into the suppression pool room 10. Furthermore, if a plurality of pipes 123 are provided, the plurality of pipes 123 may be disposed at different positions around the suppression pool room 10. In one embodiment, one or more of the plurality of pipes 123 is disposed at least above a mid-point M of the suppression pool 15. Furthermore, in one embodiment, at least one of the openings 125 of the plurality of pipes 123 may be disposed over the suppression pool 15 such that the heat transfer medium 107 flowing into the suppression pool room 10 flows over the housing of the suppression pool 15.

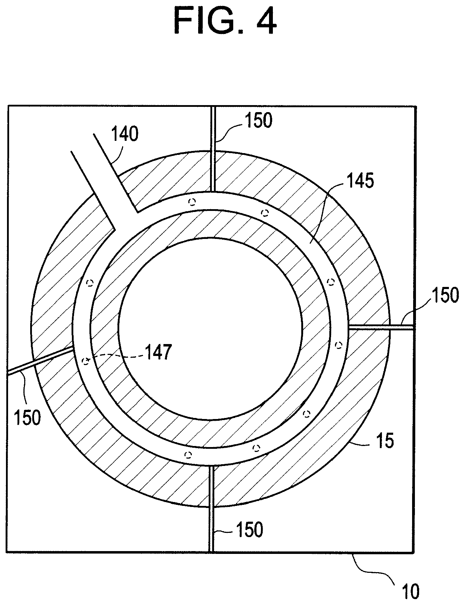

FIG. 4 illustrates yet another embodiment of a delivery system 120. In this embodiment, the delivery system 120 includes an inlet pipe 140 and a manifold 145. The inlet pipe 140 is connected to the transfer system 110 and penetrates into the suppression pool room 10. The manifold 145 is connected to the inlet pipe 140 such that the heat transfer medium 107 flowing through the inlet pipe 140 from the transfer system 110 flows into the manifold 145. The manifold 145 may be a circular pipe that includes a plurality of openings 147 from which the heat transfer medium 107 flows into the suppression pool room 10. As shown in FIG. 4, the manifold 145 is disposed over the suppression pool 15 such that the heat transfer medium 107 supplied by the manifold 145 flows over the housing of the suppression pool 15. In the embodiment of FIG. 4, struts 150 may be anchored to walls of the suppression pool room 10 and attached to the manifold 145 to support the manifold 145 above the suppression pool 15.

In the embodiment of FIG.4 the manifold 145 is shown to have a circular shape matching a shape of the suppression pool 15. However, the manifold is not limited to this shape. For example, the manifold 145 may have a polygonal shape, and still be substantially disposed over the suppression pool 15.

It will further be understood that the example embodiments are not limited to a delivery system having a singled inlet pipe connected to the manifold 145. It will further be understood that the example embodiments are not limited to a delivery system having a singled manifold.

In another embodiment, instead of a manifold, a sprinkler system may be provided to spray the heat transfer medium 107 onto the suppression pool 15.

Additionally, the embodiments are not limited to a single storage tank and/or a single transfer system and/or a single delivery system.

As further shown in FIG. 2, the heat removal system may also include one or more vents 130. Each vent 130 is configured to allow gas to escape from the suppression pool room 10. As will be appreciated, sufficiently high temperatures may cause the heat transfer medium 107 to convert to a gaseous state and build pressure within the suppression pool room 10. The vent or vents 130 reduce this pressure to provide an added measure of safety.

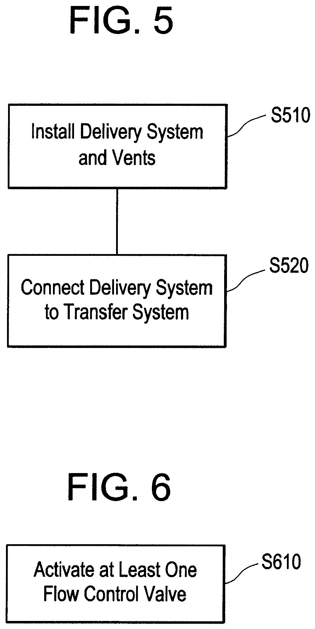

Next, installation and operation of the heat removal system will be described with respect to FIGS. 5 and 6. FIG. 5 illustrates a method a method of installing the heat removal system. As shown, the method includes installing the delivery system 120 and vents 130 in the BWR building 5 in step S510. Next, the delivery system 120 is connected to the transfer system 120 in step S520. The transfer system 120 may have already been connected to the storage tank 105, or may be connected to the storage tank after being connected to the delivery system 120.

FIG. 6 illustrates a method of heat removal according to an example embodiment. As shown, the method includes, in step S610, activating at least one flow control valve 115 of the transfer system 110 to permit flow of the heat transfer medium 107 from the storage tank 105 to the delivery system 120 via the transfer system 110. Because the storage tank 105 is disposed above a mid-point M of the suppression pool 15, gravity will cause the heat transfer medium 107 to fill the suppression pool room 10 such that at least half the suppression pool 15 becomes submerged in the heat transfer medium 107. The flow control valve 115 may be activated by an electrical signal, may be activated by physically engaging part of the valve, etc. As another example, the flow control valve 115 may be an explosive control valve where detonating a charge associated with the flow control valve activates the flow control valve.

It will also be appreciated, that the transfer system 110 and/or storage tank 105 may include a pump to pump the heat transfer medium 107 through the transfer system 110.

In one embodiment, the storage tank 105, the flow control valve 115 and controls associated therewith may be positioned in a remote location that is remote from the suppression pool 15, for the safety of plant personnel. That is to say, locations of these elements may be at a distance from the suppression pool 15 that permits human operation with a decreased risk of radiation exposure.

The heat removal system according to the example embodiments may be installed prior to BWR plant operation, or may be installed as a retro-fitted system.

It should be understood that the heat removal system may be used during periods of time other than plant accident conditions. For instance, the heat removal system may be used simply to supplement the normal cooling of the suppression pool via the RHR system, to provide the suppression pool system with extra temperature design margins.

Example embodiments having thus been described, it will be obvious that the same may be varied in many ways. Such variations are not to be regarded as a departure from the intended scope of example embodiments, and all such modifications as would be obvious to one skilled in the art are intended to be included within the scope of the following claims.

## Claims

1. A heat removal system for a nuclear reactor (30), comprising:
a storage tank (105) configured to store a heat transfer medium (107);
a transfer system (110) configured to selectively transfer the heat transfer medium (107) from the storage tank (105) to the nuclear reactor (30); and
a delivery system (120) operationally connected to the transfer system (110), the delivery system configured to deliver the heat transfer medium to a suppression pool room (10) of the nuclear reactor, the suppression pool room housing a suppression pool (15);
wherein the delivery system (120) defines at least one opening (125) into the suppression pool room (10), wherein the opening (125) is disposed above a mid-point of the suppression pool room (10).

2. The system of claim 1, wherein the heat transfer medium (107) is water.

3. The system of claim 1 or claim 2, wherein the transfer system (110) includes at least one pipe (113, 117).

4. The system of any preceding claim, wherein the transfer system (110) includes a plurality of pipes (113-1...113-N; 117-1...117-N).

5. The system of claim 4, wherein the transfer system (110) includes at least one valve (115) configured to control a flow of the heat transfer medium (107) through at least one of the plurality of pipes (113-1...113-N; 117-1...117-N).

6. The system of claim 3, wherein the transfer system (110) includes at least one valve (115) configured to control a flow of the heat transfer medium (107) through the pipe (113, 117).

7. The system of any preceding claim, wherein the delivery system (120) defines a plurality of openings (125) into the suppression pool room (10), and more than one of the plurality of openings are above the mid-point of the suppression pool room.

8. The system of any preceding claim, wherein the delivery system (120) is configured to deliver the heat transfer medium (107) onto a housing of the suppression pool to remove heat.

9. The system of any preceding claim, wherein the delivery system (120) is configured to deliver the heat transfer medium (107) onto a housing of the suppression pool (15).

10. The system of any preceding claim, wherein the delivery system (120) includes at least one pipe disposed in part over a housing of the suppression pool (15), the pipe including at least one opening to deliver the heat transfer medium (107) onto the housing of the suppression pool.

11. The system of any preceding claim, wherein the delivery system (120) includes a spray mechanism configured to spray the heat transfer medium on a housing of the suppression pool (15).

12. A method of removing heat from a nuclear reactor, comprising:
activating (610) at least one flow control valve (115) of a transfer system (110) to permit flow of a heat transfer medium from a storage tank (105) to a delivery system (120) via the heat transfer system, the delivery system configured to supply the heat transfer medium to a suppression pool room (10) of the nuclear reactor (30), the suppression pool room housing a suppression pool (15); wherein the delivery system (120) defines at least one opening (125) into the suppression pool room (10), wherein the opening (125) is disposed above a mid-point of the suppression pool room (10).

## Patentansprüche

1. Wärmeabfuhrsystem für einen Kernreaktor (30), umfassend:
einen Speichertank (105), der konfiguriert ist, um ein Wärmetransfermedium (107) zu speichern;
ein Transfersystem (110), das konfiguriert ist, um das Wärmetransfermedium (107) selektiv vom Speichertank (105) zum Kernreaktor (30) zu transferieren; und
ein Abgabesystem (120), der betreibbar mit dem Transfersystem (110) verbunden ist, wobei das Abgabesystem konfiguriert ist, um das Wärmetransfermedium an einen Auffangbeckenraum (10) des Kernreaktors abzugeben, wobei der Auffangbeckenraum ein Auffangbecken (15) aufnimmt;
wobei das Abgabesystem (120) mindestens eine Öffnung (125) in den Auffangbeckenraum (10) definiert, wobei die Öffnung (125) über einem Mittelpunkt des Auffangbeckenraums (10) angeordnet ist.

2. System nach Anspruch 1, wobei das Wärmetransfermedium (107) Wasser ist.

3. System nach Anspruch 1 oder Anspruch 2, wobei das Transfersystem (110) mindestens ein Rohr (113, 117) aufweist.

4. System nach einem der vorhergehenden Ansprüche, wobei das Transfersystem (110) eine Vielzahl von Rohren (113-1...113-N; 117-1...117-N) aufweist.

5. System nach Anspruch 4, wobei das Transfersystem (110) mindestens ein Ventil (115) aufweist, das konfiguriert ist, um einen Durchfluss des Wärmetransfermediums (107) durch mindestens eines der Vielzahl von Rohren (113-1...113-N; 117-1...117-N) zu steuern.

6. System nach Anspruch 3, wobei das Transfersystem (110) mindestens ein Ventil (115) aufweist, das konfiguriert ist, um einen Durchfluss des Wärmetransfermediums (107) durch das Rohr (113, 117) zu steuern.

7. System nach einem der vorhergehenden Ansprüche, wobei das Abgabesystem (120) eine Vielzahl von Öffnungen (125) in den Auffangbeckenraum (10) definiert, und mehr als eine der Vielzahl von Öffnungen über dem Mittelpunkt des Auffangbeckenraums liegen.

8. System nach einem der vorhergehenden Ansprüche, wobei das Abgabesystem (120) konfiguriert ist, um das Wärmetransfermedium (107) auf ein Gehäuse des Auffangbeckens abzugeben, um Wärme abzuführen.

9. System nach einem der vorhergehenden Ansprüche, wobei das Abgabesystem (120) konfiguriert ist, um das Wärmetransfermedium (107) auf ein Gehäuse des Auffangbeckens (15) abzugeben.

10. System nach einem der vorhergehenden Ansprüche, wobei das Abgabesystem (120) mindestens ein Rohr umfasst, das teilweise über einem Gehäuse des Auffangbeckens (15) angeordnet ist, wobei das Rohr mindestens eine Öffnung aufweist, um das Wärmetransfermedium (107) auf das Gehäuse des Auffangbeckens abzugeben.

11. System nach einem der vorhergehenden Ansprüche, wobei das Abgabesystem (120) einen Sprühmechanismus aufweist, der konfiguriert ist, um das Wärmetransfermedium auf ein Gehäuse des Auffangbeckens (15) zu sprühen.

12. Verfahren zur Abfuhr von Wärme aus einem Kernreaktor, umfassend:
Aktivieren (610) mindestens eines Durchflusssteuerventils (115) eines Transfersystems (110), um einen Durchfluss eines Wärmetransfermediums von einem Speichertank (105) zu einem Abgabesystem (120) über das Wärmetransfersystem zu gestatten, wobei das Abgabesystem konfiguriert ist, um das Wärmetransfermedium einem Auffangbeckenraum (10) des Kernreaktors (30) zuzuführen, wobei der Auffangbeckenraum ein Auffangbecken (15) aufnimmt; wobei das Abgabesystem (120) mindestens eine Öffnung (125) in den Auffangbeckenraum (10) definiert, wobei die Öffnung (125) über einem Mittelpunkt des Auffangbeckenraums (10) angeordnet ist.

## Revendications

1. Système d'enlèvement de chaleur pour un réacteur nucléaire (30), comprenant :
un réservoir de stockage (105) configuré pour stocker un milieu de transfert de chaleur (107) ;
un système de transfert (110) configuré pour transférer de manière sélective le milieu de transfert de chaleur (107) depuis le réservoir de stockage (105) vers le réacteur nucléaire (30) ; et
un système de délivrance (120) relié de manière opérationnelle au système de transfert (110), le système de délivrance étant configuré pour délivrer le milieu de transfert de chaleur à un espace pour piscine de suppression (10) du réacteur nucléaire, l'espace pour piscine de suppression logeant une piscine de suppression (15) ;
dans lequel le système de délivrance (120) définit au moins une ouverture (125) dans l'espace pour piscine de suppression (10), dans lequel l'ouverture (125) est disposée au-dessus d'un point médian de l'espace pour piscine de suppression (10).

2. Système selon la revendication 1, dans lequel le milieu de transfert de chaleur (107) est de l'eau.

3. Système selon la revendication 1 ou la revendication 2, dans lequel le système de transfert (110) inclut au moins un tuyau (113, 117).

4. Système selon l'une quelconque des revendications précédentes, dans lequel le système de transfert (110) inclut une pluralité de tuyaux (113-1... 113-N ; 117-1 ... 117-N).

5. Système selon la revendication 4, dans lequel le système de transfert (110) inclut au moins une vanne (115) configurée pour commander un flux du milieu de transfert de chaleur (107) à travers au moins un de la pluralité de tuyaux (113-1 ... 113-N ; 117-1... 117-N).

6. Système selon la revendication 3, dans lequel le système de transfert (110) inclut au moins une vanne (115) configurée pour commander un flux du milieu de transfert de chaleur (107) à travers le tuyau (113, 117).

7. Système selon l'une quelconque des revendications précédentes, dans lequel le système de délivrance (120) définit une pluralité d'ouvertures (125) dans l'espace pour piscine de suppression (10), et plus d'une ouverture de la pluralité d'ouvertures sont au-dessus du point médian de l'espace pour piscine de suppression.

8. Système selon l'une quelconque des revendications précédentes, dans lequel le système de délivrance (120) est configuré pour délivrer le milieu de transfert de chaleur (107) sur un logement de la piscine de suppression pour enlever la chaleur.

9. Système selon l'une quelconque des revendications précédentes, dans lequel le système de délivrance (120) est configuré pour délivrer le milieu de transfert de chaleur (107) sur un logement de la piscine de suppression (15).

10. Système selon l'une quelconque des revendications précédentes, dans lequel le système de délivrance (120) inclut au moins un tuyau disposé en partie sur un logement de la piscine de suppression (15), le tuyau incluant au moins une ouverture pour délivrer le milieu de transfert de chaleur (107) sur le logement de la piscine de suppression.

11. Système selon l'une quelconque des revendications précédentes, dans lequel le système de délivrance (120) inclut un mécanisme de pulvérisation configuré pour pulvériser le milieu de transfert de chaleur sur un logement de la piscine de suppression (15).

12. Procédé consistant à enlever la chaleur d'un réacteur nucléaire, comprenant :
l'activation (610) d'au moins une vanne de commande de flux (115) d'un système de transfert (110) pour autoriser un flux d'un milieu de transfert de chaleur depuis un réservoir de stockage (105) jusqu'à un système de délivrance (120) via le système de transfert de chaleur, le système de délivrance étant configuré pour fournir le milieu de transfert de chaleur à un espace pour piscine de suppression (10) du réacteur nucléaire (30), l'espace pour piscine de suppression logeant une piscine de suppression (15) ; dans lequel le système de délivrance (120) définit au moins une ouverture (125) dans l'espace pour piscine de suppression (10), dans lequel l'ouverture (125) est disposée au-dessus d'un point médian de l'espace pour piscine de suppression (10).
